# FASCICULE DE BREVET EUROPEEN

(11) **EP 3 052 537 B1**
(45) Date de publication et mention de la délivrance du brevet: **16.01.2019**
(21) Numéro de dépôt: 14780479.3
(22) Date de dépôt: 02.10.2014
(51) Int. Cl.: C08G 12/00, B01J 31/04, B05D 3/02, B27N 3/00, C08J 9/30, C08G 69/08, C08K 5/55, C09J 161/00, C09J 161/06, C09J 161/18, C08L 61/00, C08L 61/20

(54) **COMPOSITION ADHESIVE AQUEUSE POUR LE COLLAGE**
WÄSSRIGE KLEBSTOFFZUSAMMENSETZUNG ZUM VERKLEBEN
AQUEOUS ADHESIVE COMPOSITION FOR ADHESIVE BONDING

(30) Priorité: 02.10.2013 FR 1359554
(43) Date de publication de la demande: 10.08.2016
(73) Titulaire: Compagnie Générale des Etablissements Michelin, 63000 Clermont-Ferrand (FR)
(72) Inventeur: DOISNEAU, David, F-63040 Clermont-Ferrand Cedex 9 (FR)
(74) Mandataire: Desbordes, Guillaume
(86) Numéro de dépôt international: PCT/EP2014/071120
(87) Numéro de publication internationale: WO 2015/049326

(56) Documents cités:
- WO-A1-2013/017421
- WO-A1-2013/065291
- WO-A1-2013/163245
- GB-A- 468 746
- GB-A- 546 373
- US-A- 2 413 624
- US-A- 2 834 705
- US-A- 3 112 293
- US-A- 3 365 468
- US-A- 3 969 300
- US-A- 4 273 883
- US-A1- 2009 004 395
- US-A1- 2009 005 504

## Description

La présente invention concerne des compositions adhésives aqueuses destinées à faire adhérer des éléments entre eux, l'utilisation et le procédé de fabrication d'une telle composition, le procédé d'assemblage des éléments au moyen de ces compositions ainsi que les assemblages fabriqués à l'aide de ces compositions.

Il est connu de très longue date de coller deux éléments, par exemple des éléments de bois entre eux à l'aide d'une composition adhésive aqueuse. On connait plusieurs types de compositions dont une composition de type urée-aldéhyde comme décrite dans le document « La colle caurite et son utilisation dans les industries du bois » (A. Villière, ENEF Ecole National des Eaux et Forêts, Annales de l'école nationale des eaux et forêts et de la station de recherches et expériences [ISSN 0365-1827], 1942, Vol. 8, N° 2; p. 207-279). Cette composition comprend une résine urée-aldéhyde à base de formaldéhyde et d'urée.

On utilise cette composition dans un procédé de collage d'articles en bois. Au cours de ce procédé, on enduit un ou plusieurs éléments en bois d'une couche de la composition, on joint les éléments les uns aux autres par l'intermédiaire de la couche de composition et on cuit les éléments ainsi joints. L'assemblage collé ainsi obtenu présente une cohésion élevée grâce aux excellentes propriétés adhésives de la composition.

Toutefois, l'utilisation de formaldéhyde, qui plus est en excès pas rapport à l'urée, entraine la libération de formaldéhyde non seulement lors de la cuisson mais également lors du stockage et de l'utilisation de l'assemblage collé. Or, en raison de l'évolution récente de la réglementation, notamment de la réglementation européenne sur ce type de composé, on souhaite limiter autant que possible, voire supprimer l'utilisation de formaldéhyde ou de précurseur de formaldéhyde. US 2009/005504, US2009/004395, GB546373 et WO2013/065291 divulguent des compositions comprenant des résines à base de furfuraldéhyde. WO2013017421 décrit une composition adhésive aqueuse comprenant une résine phénol-aldéhyde. US3365468 divulgue des produits de condensation à base d'urée et de benzaldéhyde. GB468746 divulgue des produits de condensation à base de triazine et d'aldéhyde, notamment le benzaldéhyde et le furfural. US2413624, US3969300, US3112293 et US2834705 décrivent des compositions comprenant des résines à base de formaldéhyde. US4273883 décrit l'ajout de p-méthoxybenzaldéhyde à un prépolymère d'urée-formaldéhyde. WO2013/163245 divulgue une résine à base de tanins et d'aldéhydes multifonctionnels.

L'invention a pour but de fournir une composition aqueuse adhésive pour le collage présentant des propriétés adhésives élevées et dépourvue de formaldéhyde.

Or, au cours de leurs recherches, les Demanderesses ont découvert une composition adhésive aqueuse n'utilisant pas de formaldéhyde qui permet d'atteindre le but ci-dessus.

Ainsi, un premier objet de l'invention concerne une composition adhésive aqueuse comprenant une résine à base :
- d'au moins un aldéhyde aromatique porteur d'au moins deux fonctions aldéhyde, comprenant au moins un noyau aromatique, et
- d'au moins un composé de formule **(I)** : 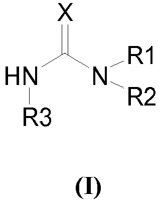 dans laquelle :
   chaque groupe R1, R2, R3 représente, indépendamment l'un de l'autre, un groupe alkyl, aryl, arylalkyl, alkylaryl, cycloalkyl ou hydrogène, et
   X représente S, O ou N-R4 avec R4 représentant un groupe alkyl, aryl, arylalkyl, alkylaryl, cycloalkyl.

Un autre objet de l'invention concerne l'utilisation d'une composition adhésive telle que définie ci-dessus pour le collage de deux éléments, et préférentiellement pour le collage de deux éléments en bois.

L'invention concerne également un procédé de fabrication d'une composition adhésive aqueuse telle que définie ci-dessus dans lequel on mélange le composé de formule **(I)** et l'aldéhyde aromatique dans une solution aqueuse.

L'invention concerne également un procédé de collage de deux éléments, préférentiellement de deux éléments en bois, dans lequel:
- on applique une couche de la composition adhésive aqueuse telle que définie ci-dessus sur au moins l'un des deux éléments, et
- on joint les deux éléments l'un à l'autre par l'intermédiaire de la couche de la composition adhésive aqueuse.

L'invention concerne également un assemblage collé de deux éléments, préférentiellement de deux éléments en bois, comprenant une couche de la composition adhésive aqueuse telle que définie ci-dessus joignant les deux éléments l'un à l'autre.

L'invention ainsi que ses avantages seront aisément compris à la lumière de la description et des exemples de réalisation qui suivent.

### I - COMPOSITION ADHÉSIVE AQUEUSE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, de l'assemblage, en particulier au cours d'une étape de cuisson, éventuellement sous pression.

### 1.1 - Aldéhyde aromatique

Le premier constituant essentiel de la résine est un aldéhyde aromatique.

Conformément à l'invention, l'aldéhyde aromatique est porteur d'au moins deux fonctions aldéhydes. Encore plus préférentiellement, le noyau aromatique de l'aldéhyde aromatique est porteur des deux fonctions aldéhydes, ces dernières pouvant être en position ortho, méta ou para sur le noyau aromatique. De façon complètement inattendue, la présence d'au moins deux fonctions aldéhydes sur le noyau aromatique ne désactive pas la réactivité du noyau aromatique de sorte que la réaction entre l'aldéhyde aromatique et le composé de formule **(I)** n'est pas impactée. Bien au contraire, la présence de deux fonctions aldéhydes sur le noyau aromatique permet une réaction rapide et l'obtention d'une composition adhésives aqueuse au moins aussi, voir plus performante que celle avec un noyau aromatique porteur d'une unique fonction aldéhyde.

Avantageusement, le noyau aromatique de l'aldéhyde aromatique est un noyau benzénique.

De préférence, l'aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde, et les mélanges de ces composés.

Préférentiellement, l'aldéhyde aromatique est choisi dans le groupe constitué par le 1,3-benzène-dicarboxaldéhyde, le 1,4-benzène-dicarboxaldéhyde et les mélanges de ces composés.

Encore plus préférentiellement l'aldéhyde aromatique utilisé est le 1,4-benzène-dicarboxaldéhyde, encore appelé téréphtaldéhyde, pour rappel de formule chimique développée :

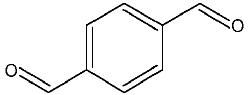

Dans d'autres modes de réalisation, l'aldéhyde aromatique présente la formule générale **(A):** 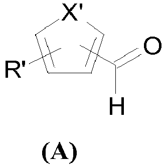 dans laquelle X' comprend N, S ou O et R' représente -H ou -CHO.

De tels aldéhydes aromatiques sont issus de ressources renouvelables et pas du pétrole. Ces aldéhydes aromatiques sont par exemple issus de la bio-ressource ou de produits de transformation de la bio-ressource.

Préférentiellement, l'aldéhyde aromatique est de formule générale **(A'):**

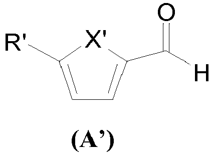

Selon un mode de réalisation préférentiel, X' représente O.

Dans une variante de l'aldéhyde aromatique de formule générale **(A)**, X' représente O et R' représente -H. L'aldéhyde aromatique utilisé est alors de formule **(B1):**

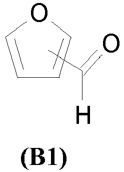

Dans une variante de l'aldéhyde aromatique de formule générale **(A')**, X' représente O et R' représente -H. L'aldéhyde aromatique utilisé est alors le furfuraldéhyde et est de formule **(B'1):**

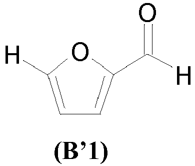

Dans une autre variante de l'aldéhyde aromatique de formule générale **(A),** X' représente O et R' représente -CHO. L'aldéhyde aromatique utilisé est alors de formule **(B2):**

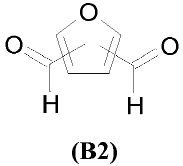

Dans une autre variante de l'aldéhyde aromatique de formule générale **(A')**, X' représente O et R' représente -CHO. L'aldéhyde aromatique utilisé est alors le 2,5-furanedicarboxaldéhyde et est de formule **(B'2)**:

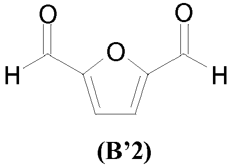

Dans un autre mode de réalisation, X' comprend N.

Dans une variante de l'aldéhyde aromatique de formule générale **(A),** X' représente NH. L'aldéhyde aromatique utilisé est de formule **(C1):**

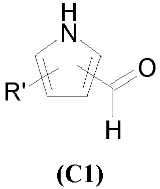

Dans une variante de l'aldéhyde aromatique de formule générale **(A')**, X' représente NH. L'aldéhyde aromatique utilisé est de formule **(C'1):**

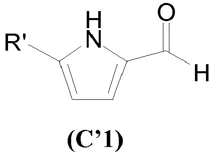

De préférence, R' représente -CHO dans la variante de l'aldéhyde aromatique de formule **(C'1)** et l'aldéhyde aromatique obtenu est alors le 2,5-1H-pyrroledicarboxaldéhyde.

Dans une autre variante de l'aldéhyde aromatique de formule générale **(A),** X' représente NR1' avec R1' représentant un groupe alkyle, aryle arylalkyle, alkylaryle ou cycloalkyle. L'aldéhyde aromatique utilisé est de formule **(C2):**

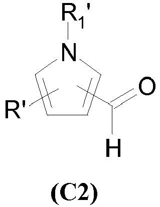

Dans un autre mode de réalisation, X' comprend S.

Dans une variante de l'aldéhyde aromatique de formule générale **(A),** X' représente S. L'aldéhyde aromatique utilisé est de formule **(D1):**

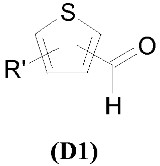

Dans une variante de l'aldéhyde aromatique de formule générale **(A'),** X' représente S. L'aldéhyde aromatique utilisé est de formule **(D'1):**

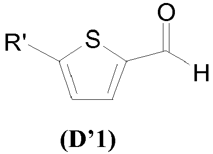

De préférence, R' représente -CHO dans la variante de l'aldéhyde aromatique de formule **(D'1)** et est alors le 2,5-thiophènedicarboxaldéhyde.

Dans une autre variante de l'aldéhyde aromatique de formule générale **(A),** X' représente SR2' avec R2' représentant un groupe alkyle, aryle arylalkyle, alkylaryle ou cycloalkyle. L'aldéhyde aromatique utilisé est de formule **(D2):**

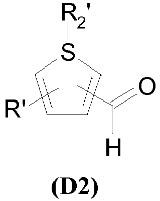

Dans encore une autre variante de l'aldéhyde aromatique de formule générale **(A),** X' représente R3'-S-R2' avec R2', R3' représentant chacun indépendamment l'un de l'autre un groupe alkyle, aryle arylalkyle, alkylaryle ou cycloalkyle. L'aldéhyde aromatique utilisé est de formule **(D3):**

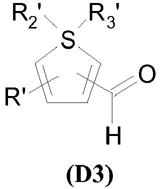

Dans encore une autre variante de l'aldéhyde aromatique de formule générale **(A),** X' représente S=O. L'aldéhyde aromatique utilisé est de formule **(D4):**

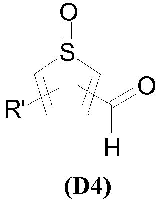

Dans encore une autre variante de l'aldéhyde aromatique de formule générale **(A),** X' représente O=S=O. L'aldéhyde aromatique utilisé est de formule **(D5):**

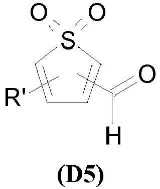

Parmi les différents modes de réalisation décrits ci-dessus, on préférera les modes de réalisation et les variantes dans lesquels X' représente NH, S ou O. Dans ces modes de réalisation et variantes, on pourra avoir, conformément à l'invention, R' représentant -H ou - CHO et de préférence R' représentant -CHO. Dans ces modes de réalisation et variantes, on aura préférentiellement R' en position 5 et le groupe -CHO en position 2 sur le noyau aromatique (formule générale **(A')**).

De préférence, lorsque la résine est à base d'un unique aldéhyde aromatique, la composition est dépourvue de formaldéhyde.

Lorsque la résine est à base de plusieurs aldéhydes, dont au moins l'un est un aldéhyde aromatique, chaque aldéhyde est préférentiellement différent du formaldéhyde. La composition est alors également préférentiellement dépourvue de formaldéhyde.

En d'autres termes et de manière préférée, le ou chaque aldéhyde de la résine est différent du formaldéhyde.

Par dépourvue de formaldéhyde, on entend que le taux massique de formaldéhyde en poids total du ou des aldéhydes est strictement inférieur à 1%.

Dans certains modes de réalisation, la composition peut comprendre du formaldéhyde. De préférence, la composition comprend alors un taux massique de formaldéhyde en poids total du ou des aldéhydes est inférieur ou égal à 10%, de préférence à 5% et plus préférentiellement à 2%.

### 1.2 - Composé de formule (I)

Le deuxième constituant essentiel de la résine est un composé de formule **(I)** 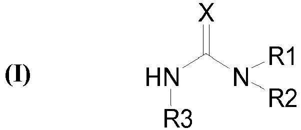 dans laquelle :
chaque groupe R1, R2, R3 représente, indépendamment l'un de l'autre, un groupe alkyl, aryl, arylalkyl, alkylaryl, cycloalkyl ou hydrogène, et
X représente S, O ou N-R4 avec R4 représentant un groupe alkyl, aryl, arylalkyl, alkylaryl, cycloalkyl.

De préférence, R1 et/ou R2 et/ou R3 représente l'hydrogène.

Préférentiellement, X représente O.

Plus préférentiellement, le composé de formule **(I)** est l'urée de formule **(I')** ci-dessous.

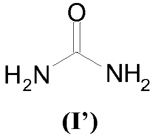

L'urée peut être issue de ressources renouvelables. En outre, elle est abondante et particulièrement peu coûteuse.

### 1.3 - Additifs

Avantageusement, la composition adhésive aqueuse comprend moins de 16 % (valeur exclue) en masse de latex d'élastomère diénique insaturé. Par pourcentage en masse de la composition, on comprend le pourcentage en masse de la composition totale, c'est-à-dire masse de latex sur masse des constituants secs plus masse de l'eau.

De préférence, la composition comprend au plus 10 %, de préférence au plus 5 %, et plus préférentiellement au plus 1% en masse de latex d'élastomère diénique insaturé.

Les latex d'élastomère diénique insaturé (c'est-à-dire porteur de doubles liaisons carbone-carbone) sont bien connus de l'homme du métier. On rappelle qu'un latex est une dispersion stable de microparticules d'élastomère(s) en suspension dans une solution aqueuse.

L'élastomère diénique insaturé du latex présent dans une quantité inférieure à 16% en masse est préférentiellement choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Dans un mode de réalisation, la composition adhésive aqueuse comprend au moins un acide. L'acide est par exemple un acide fort ou un acide organique. La quantité molaire d'acide est comprise entre 5 et 20 % de la quantité molaire de composé de formule **(I).**

La composition adhésive aqueuse peut bien entendu comporter tout ou partie des additifs habituels pour compositions adhésives aqueuses. On citera par exemple des colorants, charges, antioxydants ou autre stabilisants. On citera également les additifs permettant de modifier le temps d'ouverture de la résine et le temps de prise de la résine.

De préférence, on a 1 ≤ nf.na/nu ≤ 3 avec nf étant le nombre de fonction(s) aldéhyde portée(s) par l'aldéhyde aromatique, na le nombre de mole d'aldéhyde aromatique et nu le nombre de mole du composé de formule **(I).**

### II - PROCÉDÉ DE FABRICATION DE LA COMPOSITION ADHÉSIVE AQUEUSE DE L'INVENTION

Typiquement, lors d'une première étape de fabrication, on prépare une solution aqueuse en mélangeant de l'eau, le composé de formule **(I)**, l'aldéhyde aromatique et un acide, par exemple de l'acide chlorhydrique.

Le mélange ainsi formé est mis sous agitation pendant 30 à 90 min, par exemple 60 min à 40°C. A l'issu de ce temps d'agitation, la résine ainsi condensée présente l'apparence d'un gel blanchâtre.

Dans un mode de réalisation, on obtient directement la composition adhésive aqueuse qui est utilisable immédiatement. Dans un autre mode de réalisation, on ajoute une base de façon à neutraliser l'acide et à obtenir une résine pré-condensée pour pouvoir la stocker et l'utiliser ultérieurement.

La concentration de la composition peut être ajustée en fonction de son utilisation spécifique (temps d'ouverture, viscosité). Ainsi, la composition pourra être utilisée immédiatement ou bien stockée pendant un temps de maturation pouvant varier typiquement de une à plusieurs heures voire plusieurs jours, avant son utilisation finale.

### III - ASSEMBLAGE COLLÉ DE L'INVENTION

Comme indiqué précédemment, la présente invention concerne également l'utilisation de la composition adhésive aqueuse précédemment décrite pour le collage de deux éléments, préférentiellement de deux éléments en bois.

Ainsi, un assemblage collé de deux éléments, préférentiellement de deux éléments en bois, selon l'invention comprend une couche de la composition adhésive aqueuse telle que décrite précédemment joignant les deux éléments l'un à l'autre.

Lorsque l'on utilise la colle selon l'invention pour le collage du bois, par bois, on entend le tissu végétal issu de plantes ligneuses. Des exemples de tissu végétal sont le tronc, les branches et les racines. Par exemple, les plantes ligneuses dont sont issues le tissu végétal sont le chêne, le châtaignier, le frêne, le noyer, le hêtre, le peuplier, le sapin, le pin, l'olivier, l'aulne ou encore le bouleau.

On pourra également utiliser la colle pour le collage d'éléments réalisés dans des matériaux différents du bois, par exemple les matières plastiques, par exemple les matières thermodurcissables ou thermoplastique, le métal, les textiles, les matières minérales ou les mélanges de ces matériaux, y compris avec le bois.

Par élément, on entend toute particule ou morceau monolithique. Des exemples d'éléments en bois sont des plis destinés à former un assemblage contreplaqué, des lattis destinés à former un assemblage latté, des particules telles que des copeaux, de la sciure, de la farine ou des flocons, pour former un assemblage aggloméré, que les particules soient orientées ou non, des fibres destinées à former un assemblage de fibres tel qu'un panneau haute ou moyenne densité, des morceaux de bois massif, également appelés bois d'oeuvre, destinés à former des assemblages tels que des meubles, des charpentes.

### IV - PROCÉDÉ DE FABRICATION DE L'ASSEMBLAGE COLLÉ DE L'INVENTION

L'assemblage collé de l'invention peut être préparé selon un procédé de collage de deux éléments, préférentiellement de deux éléments en bois, dans lequel :
- on applique une couche de la composition adhésive aqueuse telle que décrite précédemment sur au moins l'un des deux éléments, et
- on joint les deux éléments l'un à l'autre par l'intermédiaire de la couche de la composition adhésive aqueuse.

L'étape d'application de la composition adhésive sur l'un ou les éléments peut être réalisée selon toute méthode appropriée, notamment par toute technique d'enduction connue telle que par exemple pulvérisation, imprégnation, injection sous pression ou encore par une combinaison d'une ou plusieurs de ces techniques.

Dans un mode de réalisation, on ajoute, à la composition adhésive aqueuse, un durcisseur postérieurement à l'étape d'application de la couche de la composition adhésive aqueuse. Dans un autre mode de réalisation, on ajoute un durcisseur à la composition adhésive aqueuse antérieurement à l'étape d'application de la couche de la composition adhésive aqueuse. Dans un autre mode de réalisation, on applique le durcisseur sur au moins l'un des deux éléments antérieurement à l'étape d'application de la couche de la composition adhésive aqueuse.

Avantageusement, on utilise un durcisseur lorsqu'on utilise une résine pré-condensée.

Le durcisseur est préférentiellement un acide fort, un acide organique ou une base faible. On citera par exemple l'acide chlorhydrique, les acides organiques tels que l'acide citrique ou l'acide ascorbique. On citera également, en tant que durcisseur, les sels d'ammonium ou encore l'hexaméthylène tétramine. Dans un mode de réalisation préféré, dans lequel on souhaite éviter l'utilisation de formaldéhyde ou de précurseur de formaldéhyde, on évitera l'utilisation d'hexaméthylène tétramine.

On pourra préférentiellement utiliser un taux de composition adhésive aqueuse allant de 50 à 250 gr.m⁻².

Après l'étape d'application de la composition adhésive, l'assemblage collé est chauffé à une température allant de 30°C à 200°C, de préférence de 80°C à 160°C en fonction des applications visées et en fonction du temps de chauffage qui, lui peut varier de quelques minutes à plusieurs heures.

De préférence, l'assemblage collé est maintenu sous pression, par exemple comprise entre 1 et 150 kg.cm⁻². Plus préférentiellement, l'étape de maintien sous pression est réalisée simultanément avec l'étape de chauffage.

La durée de l'étape de chauffage, la température de chauffage et/ou la pression utilisée varient selon les cas, notamment en fonction du couple température-pression utilisé.

### V - EXEMPLES DE REALISATION DE L'INVENTION ET ESSAIS COMPARATIFS

Ces essais démontrent que l'adhésion entre plusieurs éléments, ici des éléments en bois, joints par l'intermédiaire d'une couche de composition adhésive aqueuse selon l'invention est sensiblement équivalente voire même améliorée, par rapport à l'adhésion obtenue avec une composition adhésive conventionnelle utilisant du formaldéhyde.

Pour cela, plusieurs compositions adhésives aqueuses ont été préparées comme indiqué précédemment, une conformément à l'invention (notées ci-après C-2) et une non conformément à l'invention (composition témoin notée ci-après C-1). Leurs formulations (exprimées en masse) sont présentées dans le tableau 1 annexé. Les quantités répertoriées dans ce tableau sont celles des constituants à l'état sec. Pour la préparation de ces compositions, on a utilisé respectivement 15g et 30 g d'eau pour chaque composition C-1 et C-2.

La composition C-1 est une composition témoin connue de l'état de la technique couramment utilisée pour le collage. Cette composition adhésive est à base de formaldéhyde et d'urée.

La composition C-2 comprend un aldéhyde aromatique comprenant au moins un noyau aromatique porteur d'au moins une fonction aldéhyde. En l'espèce, le noyau aromatique est un noyau benzénique porteur ici de deux fonctions aldéhydes.

L'aldéhyde aromatique de la composition C-2 est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés. L'aldéhyde aromatique de la composition C-2 est le 1,4-benzène-dicarboxaldéhyde.

La composition C-2 comprend un composé de formule **(I)** 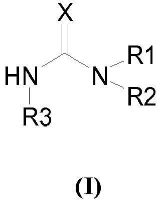 dans laquelle :
chaque groupe R1, R2, R3 représente, indépendamment l'un de l'autre, un groupe alkyl, aryl, arylalkyl, alkylaryl, cycloalkyl ou hydrogène, et
X représente S, O ou N-R4 avec R4 représentant un groupe alkyl, aryl, arylalkyl, alkylaryl, cycloalkyl.

Le composé de formule **(I)** de la composition C-2 est l'urée (R1=R2=R3=H et X=O)

Chaque composition adhésive C-1 et C-2 comprend un acide, ici de l'acide chlorhydrique.

La qualité de la liaison entre les éléments est déterminée par un test dans lequel on mesure la force de rupture en flexion nécessaire pour faire rompre une éprouvette indiquant ainsi le niveau de cohésion des éléments de cette dernière.

Plus précisément, chaque éprouvette de test comprend 30 g de copeaux de bois de sapin de masse volumique égale à 1,7 g.cm⁻³ et chaque composition adhésive C-1 et C-2 (3 g d'extrait sec). Chaque éprouvette présente une forme générale cylindrique de 10 cm de diamètre et de 0,5 cm d'épaisseur. On fabrique chaque éprouvette par chauffage pendant 45 minutes à 140 °C sous 5 bars de pression.

A l'issue de la cuisson, chaque éprouvette est soumise à un test de flexion de type trois points bien connu de l'homme du métier.

On caractérise le niveau d'adhésion en mesurant la force de rupture en flexion (notée Fₘₐₓ) pour faire rompre l'éprouvette. Une valeur supérieure à celle de l'éprouvette témoin, arbitrairement fixée à 100, indique un résultat amélioré, c'est-à-dire une force de rupture en flexion supérieure à celle de l'éprouvette témoin. Les résultats des tests effectués sur les éprouvettes sont résumés dans le tableau 1.

On constate que l'assemblage collé avec la composition adhésive C-2 selon l'invention présente une force de rupture Fₘₐₓ sensiblement équivalente, même légèrement supérieure à la force de rupture de référence mesurée sur l'assemblage collé témoin avec la composition C-1.

En conclusion, les résultats de ces différents essais démontrent clairement que les compositions adhésives selon l'invention constituent une alternative intéressante à l'emploi des compositions adhésives conventionnelles et ce, sans l'utilisation de formaldéhyde.

**Tableau 1**

| **Compositions adhésives** | **C-1** | **C-2** |
|---|---|---|
| **Aldéhyde** | | |
| Formaldéhyde (1) | 4,3 | - |
| 1,4-benzènedicarboxaldéhyde (2) | - | 12,52 |

| **Composé de formule (I)** | | |
|---|---|---|
| Urée (3) | 5,7 | 7,48 |

| **Acide** | | |
|---|---|---|
| Acide Chlorhydrique (4) | 0,28 | 0,15 |
| | | |
| Poids total d'extrait sec de composition adhésive | 3 | 3 |
| | | |

| **Tests d'adhésion** | | |
|---|---|---|
| Fₘₐₓ à 20°C | 100 | 102 |

| | | |
|---|---|---|
| (1) Formol (de la société Caldic ; dilué à 36%) (2) 1,4-benzènedicarboxaldéhyde (de la société ABCR ; de pureté 98%) (3) Urée (de la société Sigma Aldrich, de pureté 100%) (4) Acide Chlorhydrique (de la société Sigma Aldrich, dilué à 37%) | | |

## Revendications

1. Composition adhésive aqueuse, **caractérisée en ce qu'**elle comprend une résine à base :
- d'au moins un aldéhyde aromatique porteur d'au moins deux fonctions aldéhyde, comprenant au moins un noyau aromatique, et
- d'au moins un composé de formule **(I)** : 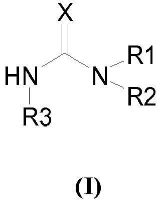 dans laquelle :
chaque groupe R1, R2, R3 représente, indépendamment l'un de l'autre, un groupe alkyl, aryl, arylalkyl, alkylaryl, cycloalkyl ou hydrogène, et
X représente S, O ou N-R4 avec R4 représentant un groupe alkyl, aryl, arylalkyl, alkylaryl, cycloalkyl.

2. Composition selon la revendication précédente, dans lequel le noyau aromatique de l'aldéhyde aromatique est porteur des deux fonctions aldéhydes.

3. Composition selon l'une quelconque des revendications précédentes, dans laquelle le noyau aromatique de l'aldéhyde aromatique est un noyau benzénique.

4. Composition selon l'une quelconque des revendications précédentes, dans laquelle l'aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

5. Composition selon la revendication précédente, dans laquelle l'aldéhyde aromatique est choisi dans le groupe constitué par le 1,3-benzène-dicarboxaldéhyde, le 1,4-benzène-dicarboxaldéhyde et les mélanges de ces composés.

6. Composition selon la revendication précédente, dans laquelle l'aldéhyde aromatique est le 1,4-benzène-dicarboxaldéhyde.

7. Composition selon l'une quelconque des revendications précédentes, dans laquelle R1 représente hydrogène.

8. Composition selon l'une quelconque des revendications précédentes, dans laquelle R2 représente hydrogène.

9. Composition selon l'une quelconque des revendications précédentes, dans laquelle R3 représente hydrogène.

10. Composition selon l'une quelconque des revendications précédentes, dans laquelle X représente O.

11. Utilisation d'une composition adhésive comprenant une résine à base :
- d'au moins un aldéhyde aromatique porteur d'au moins deux fonctions aldéhyde, comprenant au moins un noyau aromatique, et
- d'au moins un composé de formule **(I)** : 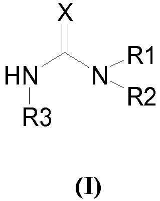 dans laquelle :
chaque groupe R1, R2, R3 représente, indépendamment l'un de l'autre, un groupe alkyl, aryl, arylalkyl, alkylaryl, cycloalkyl ou hydrogène, et
X représente S, O ou N-R4 avec R4 représentant un groupe alkyl, aryl, arylalkyl, alkylaryl, cycloalkyl,
pour le collage de deux éléments.

12. Procédé de fabrication d'une composition adhésive aqueuse selon l'une quelconque des revendications 1 à 10 dans lequel on mélange le composé de formule **(I)** et l'aldéhyde aromatique dans une solution aqueuse.

13. Procédé de collage de deux éléments, dans lequel:
- on applique une couche de la composition adhésive aqueuse selon l'une quelconque des revendications 1 à 10 sur au moins l'un des deux éléments, et
- on joint les deux éléments l'un à l'autre par l'intermédiaire de la couche de la composition adhésive aqueuse.

14. Assemblage collé de deux éléments comprenant une couche de la composition adhésive aqueuse selon l'une quelconque des revendications 1 à 10 joignant les deux éléments l'un à l'autre.

## Patentansprüche

1. Wässrige Klebstoffzusammensetzung, **dadurch gekennzeichnet, dass** sie ein Harz auf Basis
- von mindestens einem aromatischen Aldehyd mit mindestens zwei Aldehydfunktionen und mindestens einem aromatischen Kern und
- mindestens einer Verbindung der Formel **(I):** 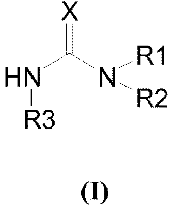 in der:
jede Gruppe R1, R2 und R3 unabhängig voneinander für eine Alkyl-, Aryl-, Arylalkyl-, Alkylaryl-, Cycloalkyl- oder Wasserstoffgruppe steht und
X für S, O oder N-R4 steht, wobei R4 für eine Alkyl-, Aryl-, Arylalkyl-, Alkylaryl- oder Cycloalkylgruppe steht,
umfasst.

2. Zusammensetzung nach dem vorhergehenden Anspruch, wobei der aromatische Kern des aromatischen Aldehyds zwei Aldehydfunktionen trägt.

3. Zusammensetzung nach einem der vorhergehenden Ansprüche, wobei es sich bei dem aromatischen Kern des aromatischen Aldehyds um einen Benzolkern handelt.

4. Zusammensetzung nach einem der vorhergehenden Ansprüche, wobei der aromatische Aldehyd aus der Gruppe bestehend aus 1,2-Benzoldicarboxaldehyd, 1,3-Benzoldicarboxaldehyd, 1,4-Benzoldicarboxaldehyd, 2-Hydroxybenzol-1,3,5-tricarbaldehyd und Gemischen dieser Verbindungen ausgewählt ist.

5. Zusammensetzung nach dem vorhergehenden Anspruch, wobei der aromatische Aldehyd aus der Gruppe bestehend aus 1,3-Benzoldicarboxaldehyd, 1,4-Benzoldicarboxaldehyd und Gemischen dieser Verbindungen ausgewählt ist.

6. Zusammensetzung nach dem vorhergehenden Anspruch, wobei es sich bei dem aromatischen Aldehyd um 1,4-Benzoldicarboxaldehyd handelt.

7. Zusammensetzung nach einem der vorhergehenden Ansprüche, wobei R1 für Wasserstoff steht.

8. Zusammensetzung nach einem der vorhergehenden Ansprüche, wobei R2 für Wasserstoff steht.

9. Zusammensetzung nach einem der vorhergehenden Ansprüche, wobei R3 für Wasserstoff steht.

10. Zusammensetzung nach einem der vorhergehenden Ansprüche, wobei X für O steht.

11. Verwendung einer Klebstoffzusammensetzung, die ein Harz auf Basis
- von mindestens einem aromatischen Aldehyd mit mindestens zwei Aldehydfunktionen und mindestens einem aromatischen Kern und
- mindestens einer Verbindung der Formel **(I):** 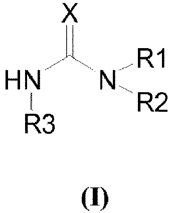 in der:
jede Gruppe R1, R2 und R3 unabhängig voneinander für eine Alkyl-, Aryl-, Arylalkyl-, Alkylaryl-, Cycloalkyl- oder Wasserstoffgruppe steht und
X für S, O oder N-R4 steht, wobei R4 für eine Alkyl-, Aryl-, Arylalkyl-, Alkylaryl- oder Cycloalkylgruppe steht,
umfasst, zum Verkleben von zwei Elementen.

12. Verfahren zur Herstellung einer wässrigen Klebstoffzusammensetzung nach einem der Ansprüche 1 bis 10, bei dem man die Verbindung der Formel **(I)** und den aromatischen Aldehyd in einer wässrigen Lösung mischt.

13. Verfahren zum Verkleben von zwei Elementen, bei dem man:
- eine Schicht der wässrigen Klebstoffzusammensetzung nach einem der Ansprüche 1 bis 10 auf mindestens eines der beiden Element aufbringt und
- die beiden Elemente über die Schicht der wässrigen Klebstoffzusammensetzung miteinander verbindet.

14. Klebverbund aus zwei Elementen, umfassend eine Schicht der wässrigen Klebstoffzusammensetzung nach einem der Ansprüche 1 bis 10, die die beiden Elemente miteinander verbindet.

## Claims

1. Aqueous adhesive composition, **characterized in that** it comprises a resin based:
- on at least one aromatic aldehyde bearing at least two aldehyde functional groups, comprising at least one aromatic ring, and
- on at least one compound of formula **(I):** 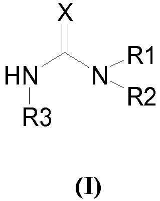 in which:
each group R1, R2 and R3 represents, independently of one another, an alkyl, aryl, arylalkyl, alkylaryl, cycloalkyl or hydrogen group, and
X represents S, O or N-R4, with R4 representing an alkyl, aryl, arylalkyl, alkylaryl or cycloalkyl group.

2. Composition according to the preceding claim, in which the aromatic ring of the aromatic aldehyde bears two aldehyde functional groups.

3. Composition according to any one of the preceding claims, in which the aromatic ring of the aromatic aldehyde is a benzene ring.

4. Composition according to any one of the preceding claims, in which the aromatic aldehyde is selected from the group consisting of 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds.

5. Composition according to the preceding claim, in which the aromatic aldehyde is selected from the group consisting of 1,3-benzenedicarboxaldehyde, 1,4-benzenedicarboxaldehyde and the mixtures of these compounds.

6. Composition according to the preceding claim, in which the aromatic aldehyde is 1,4-benzenedicarboxaldehyde.

7. Composition according to any one of the preceding claims, in which R1 represents hydrogen.

8. Composition according to any one of the preceding claims, in which R2 represents hydrogen.

9. Composition according to any one of the preceding claims, in which R3 represents hydrogen.

10. Composition according to any one of the preceding claims, in which X represents O.

11. Use of an adhesive composition comprising a resin based:
- on at least one aromatic aldehyde bearing at least two aldehyde functional groups, comprising at least one aromatic ring, and
- on at least one compound of formula **(I):** 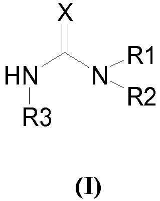 in which:
each group R1, R2 and R3 represents, independently of one another, an alkyl, aryl, arylalkyl, alkylaryl, cycloalkyl or hydrogen group, and
X represents S, O or N-R4, with R4 representing an alkyl, aryl, arylalkyl, alkylaryl or cycloalkyl group,
for the adhesive bonding of two elements.

12. Process for the manufacture of an aqueous adhesive composition according to any one of Claims 1 to 10, in which the compound of formula **(I)** and the aromatic aldehyde are mixed in an aqueous solution.

13. Process for the adhesive bonding of two elements, in which:
- a layer of the aqueous adhesive composition according to any one of Claims 1 to 10 is applied to at least one of the two elements, and
- the two elements are joined to one another via the layer of the aqueous adhesive composition.

14. Adhesively bonded assemblage of two elements comprising a layer of the aqueous adhesive composition according to any one of Claims 1 to 10 joining the two elements to one another.
